# EUROPÄISCHE PATENTANMELDUNG

(11) **EP 1 921 106 A1**
(43) Veröffentlichungstag der Anmeldung: **14.05.2008**
(21) Anmeldenummer: 07120031.5
(22) Anmeldetag: 06.11.2007
(51) Int. Cl.: C08G 77/388, C08J 5/18, C08J 7/04, C08K 5/544, C08L 83/04, C09D 183/04, C09J 183/04

(54) **Verfahren zur Herstellung von wässrigen Dispersionen von Organopolysiloxanen**

(30) Priorität: 08.11.2006 DE 102006052729
(71) Anmelder: Wacker Chemie AG, 81737 München (DE)
(72) Erfinder: Schneider, Otto Dr., 84489 Burghausen (DE); Scheim, Uwe Dr., 01640 Coswig (DE)
(74) Vertreter: Deffner-Lehner, Maria

(57) **Zusammenfassung**

Verfahren zur Herstellung von wässrigen Dispersionen von Organopolysiloxanen, durch
(a) Umsetzung von kondensationsfähige Gruppen aufweisende Organopolysiloxane (1) gemäß Anspruch 1
mit Silanen (2) der allgemeinen Formel

(R³O)₃SiCR²₂-Y (II)

oder deren Hydrolysate, wobei R² ein Wasserstoffatom oder einen einwertigen Alkylrest mit 1 bis 4 Kohlenstoffatomen, R³ einen Alkylrest mit 1 bis 8 Kohlenstoffatomen je Rest bedeutet, Y einen Rest der Formel -CH₂NHR⁴, -CH₂NR⁴₂ oder -CH₂ 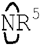 ist, wobei R⁴ und R⁵ die in Anspruch 1 dafür angegebene Bedeutung haben, in Gegenwart von Wasser (3) und Emulgator (4),
(b) Zugabe von wässrigen Kieselsäuredispersionen (5), gegebenenfalls im Gemisch mit Silanen (2) der Formel (II), entweder bei der Umsetzung (a) oder nach der Umsetzung (a),
(c) gegebenenfalls Zugabe von Haftvermittlern (6) entweder bei der Umsetzung (a) oder nach der Umsetzung (a),und
(d) gegebenenfalls Zugabe weiterer Stoffe (7), die an der Umsetzung (a) nicht teilnehmen, entweder bei der Umsetzung (a) oder nach der Umsetzung (a),
mit der Maßgabe, dass keine Metall-haltigen Katalysatoren mitverwendet werden und dass die Organopolysiloxane (1) und Silane (2) in solchen Mengen eingesetzt werden, dass die Organopolysiloxane nach dem Entfernen des Wassers (3) elastomere Filme bilden, die in Toluol unlöslich sind.

## Beschreibung

Die Erfindung betrifft ein Verfahren zur Herstellung von wässrigen Dispersionen von Organopolysiloxanen, ohne Mitverwendung von Metall-haltigen Katalysatoren. Weiterhin betrifft die Erfindung wässrige Dispersionen von Organopolysiloxanen, die nach Entfernen von Wasser Elastomere ergeben, und deren Verwendung als Dichtungs- und Beschichtungsmassen. Weiterhin betrifft die Erfindung aus den wässrigen Dispersionen von Organopolysiloxanen hergestellte elastomere Formkörper, insbesondere Filme, Dichtungen, Beschichtungen und Überzüge.

Emulsionen von vernetzten Siliconen sind bekannt. Für die Vernetzung der Silicone werden (Schwer)Metall-haltige oder Metall-freie Katalysatoren sowie Vernetzer benötigt. Teilweise werden zur Steuerung der Reaktivität und Topfzeit auch Inhibitoren verwendet, um ein unerwünschtes zu frühes Vergelen zu verhindern. Für die Verwendbarkeit als Dichtmassen für Bauanwendungen müssen die ausgehärteten Produkte darüber hinaus einen niedrigen Elastizitätsmodul besitzen.

Katalysiert hergestellte Dispersionen, die Elastomerfilme liefern, sind z.B. in US 5,001,187, US 2001/0027233 A1 oder US 4,894,412 beschrieben.
WO 2004/069899 beschreibt die Umsetzung von Silanolfunktionellen Polysiloxanen in Emulsion mit γ-Aminosilanen, wie z.B. 3-Aminopropyltrimethoxysilan, in Gegenwart von NaOH als Katalysator. Nach 6 bis 8 Stunden Reaktionszeit bei Raumtemperatur erhöht sich die Viskosität des Siliconpolymers von 4000 auf 6.500 mPa·s. Trotz des Einsatzes von trifunktionellem Silan wird kein vernetztes Elastomer erhalten.

Wasserbasierende RTV-1-Mischungen werden ebenfalls mit Metall-haltigen Katalysatoren versetzt, um eine hohe Reaktivität, schnelle Filmbildung, usw. zu erhalten, wie dies z.B. in US 5,861,459 beschrieben ist.

Metall-freie wässrige RTV-1-Dispersionen sind in EP 828 794 A und EP 655 475 A1 beschrieben. Sie sind herstellbar unter Verwendung der Ausgangsstoffe:
(A) kondensationsfähige Gruppen aufweisende Organopolysiloxane,
(B) als Vernetzer fungierende (aminfreie) Organosiliciumverbindungen mit mindestens 3 vernetzungsreaktiven Gruppen,
(C) basischen Stickstoff aufweisende Organosiliciumverbindung, besonders bevorzugt deren Alkalisilikonate, die katalytisch wirksam sind.
Komponente (C) bewirkt einen sehr hohen pH-Wert der Produkte, was bei der Verarbeitung Schwierigkeiten bereitet.

In EP 739 947 A2 sind weitere metallkatalysatorfreie wässrige RTV-1-Dispersionen beschrieben. Katalysatoren sind dabei Verbindungen, die über Si-N- oder Si-O-N-Bindungen an Silane gebunden sind und durch Hydrolyse freigesetzt werden. Darüber hinaus enthalten diese RTV-1-Dispersionen durch flüchtige Amine stabilisierte Kieselsäuredispersionen zur Verbesserung der mechanischen Eigenschaften der ausgehärteten Produkte. Nachteilig ist, dass die katalytisch wirkenden Verbindungen und die zur Stabilisierung der Kieselsäuren verwendeten Verbindungen, die sehr geruchsintensiv sind, beim Trocknen der Dispersion, d.h. also bei deren Anwendung, freigesetzt werden.

In DE 103 49 082 A1 sind wässrige Polymerdispersionen beschrieben, die ausschließlich durch Partikel in der wässrigen Phase stabilisiert werden und keinen organischen Emulgator enthalten. Derartige Emulsionen haben aber den Nachteil, dass sie bei den hohen Feststoffgehalten, wie sie für die Verwendbarkeit als Dichtmassen nötig sind, Probleme beim Aushärten dahingehend haben, dass sich keine geschlossenen Polymerfilme bilden.

DE 102004038148 A1 (und korrespondierende WO 2006015740 A1) beschreibt die Herstellung von hochviskosen Siliconen (10.000 bis 50.000.000 mPa·s) in Emulsion durch Umsetzung von silanolterminierten Organopolysiloxanen mit α-Aminomethylalkoxysilanen. Es werden jedoch keine elastomeren Siliconfilme, die in Toluol unlöslichen sind, erhalten.

In vielen Anwendungen wässriger Dispersion sind Katalysatoren, insbesondere Metall-haltige Katalysatoren, sowie Lösemittel aufgrund ihrer toxikologischen, ökologisch oder sonstigen ungünstigen Eigenschaften, wie Beeinträchtigung der Lagerstabilität der Emulsion, unerwünscht.

Es bestand die Aufgabe wässrige Dispersionen von Organopolysiloxanen sowie ein einfaches Verfahren zur Herstellung wässriger Dispersionen von Organopolysiloxanen bereitzustellen, bei dem die oben genannten Nachteile vermieden werden.
Weiterhin bestand die Aufgabe wässrige Dispersionen von Organopolysiloxanen bereitzustellen, bei dem vernetzte Organopolysiloxane erhalten werden und die nach dem Entfernen des Wassers elastomere Filme, insbesondere transparente Filme, bilden.
Ferner bestand die Aufgabe wässrige Dispersionen von Organopolysiloxanen bereitzustellen, die als Dichtungs- und Beschichtungsmassen verwendet werden können.
Weiterhin bestand die Aufgabe, Dispersionen von vernetzen Organopolysiloxanen bereitzustellen, die feinteilig, stabil und bevorzugt pH-neutral (Bereich pH ca. 5 - 9) sind.
Weiterhin bestand die Aufgabe, Dispersionen von vernetzen Organopolysiloxanen bereitzustellen, die frei oder nahezu frei von flüchtigen organischen Verbindungen (VOC) sind.

Die Aufgabe wird durch die Erfindung gelöst.

Gegenstand der Erfindung ist ein Verfahren zur Herstellung von wässrigen Dispersionen von Organopolysiloxanen, durch
(a) Umsetzung von kondensationsfähige Gruppen aufweisende Organopolysiloxane (1) der allgemeinen Formel

   R¹O(R₂SiO)ₓR¹ (I)

   wobei R einen einwertigen Kohlenwasserstoffrest mit 1 bis 18 Kohlenstoffatomen bedeutet,
   R¹ ein Wasserstoffatom oder einen Alkylrest mit 1 bis 8 Kohlenstoffatomen bedeutet, vorzugsweise ein Wasserstoffatom ist,
   x eine ganze Zahl von 10 - 1100, bevorzugt 20 - 700, besonders bevorzugt 30 - 500 ist,
   mit Silanen (2) der allgemeinen Formel

   (R³O)₃SiCR²₂-Y (II)

   oder deren Hydrolysate,
   wobei R² ein Wasserstoffatom oder einen einwertigen Alkylrest mit 1 bis 4 Kohlenstoffatomen, bevorzugt ein Wasserstoffatom bedeutet,
   R³ einen Alkylrest mit 1 bis 8 Kohlenstoffatomen je Rest bedeutet,
   Y einen Rest der Formel -NHR⁴, -NR⁴₂ oder -NR⁵ ist,
   wobei R⁴ einen einwertigen, gegebenenfalls N- und/oder O-Atome enthaltenden Kohlenwasserstoffrest mit 1 bis 18 Kohlenstoffatomen und
   R⁵ einen zweiwertigen gegebenenfalls N- und/oder O-Atome enthaltenden Kohlenwasserstoffrest mit 3 bis 12 Kohlenstoffatomen bedeutet,
   in Gegenwart von Wasser (3)
   und Emulgator (4),
(b) Zugabe von wässrigen Kieselsäuredispersionen (5), gegebenenfalls im Gemisch mit Silanen (2) der Formel (II), entweder bei der Umsetzung (a) oder nach der Umsetzung (a), bevorzugt nach der Umsetzung (a),
(c) gegebenenfalls Zugabe von Haftvermittlern (6) entweder bei der Umsetzung (a) oder nach der Umsetzung (a), bevorzugt nach der Umsetzung (a),und
(d) gegebenenfalls Zugabe weiterer Stoffe (7), die an der Umsetzung (a) nicht teilnehmen, entweder bei der Umsetzung (a) oder nach der Umsetzung (a), bevorzugt nach der Umsetzung (a),
mit der Maßgabe, dass keine Metall-haltigen Katalysatoren mitverwendet werden und dass die Organopolysiloxane (1) und Silane (2) in solchen Mengen eingesetzt werden, dass die Organopolysiloxane nach dem Entfernen des Wassers (3) elastomere Filme bilden, die in Toluol unlöslich sind.

Gegenstand der Erfindung sind weiterhin wässrige Dispersionen von Organopolysiloxanen, erhältlich durch
(a) Umsetzung von kondensationsfähige Gruppen aufweisende Organopolysiloxane (1) der allgemeinen Formel

   R¹O(R₂SiO)ₓR¹ (I)

   wobei R einen einwertigen Kohlenwasserstoffrest mit 1 bis 18 Kohlenstoffatomen bedeutet,
   R¹ ein Wasserstoffatom oder einen Alkylrest mit 1 bis 8 Kohlenstoffatomen bedeutet, vorzugsweise ein Wasserstoffatom ist,
   x eine ganze Zahl von 10 - 1100, bevorzugt 20 - 700, besonders bevorzugt 30 - 500 ist,
   mit Silanen (2) der allgemeinen Formel

   (R³O)₃SiCR²₂-Y (II)

   oder deren Hydrolysate,
   wobei R² ein Wasserstoffatom oder einen einwertigen Alkylrest mit 1 bis 4 Kohlenstoffatomen, bevorzugt ein Wasserstoffatom bedeutet,
   R³ einen Alkylrest mit 1 bis 8 Kohlenstoffatomen je Rest bedeutet,
   Y einen Rest der Formel -NHR⁴, -NR⁴₂ oder -NR⁵ ist,
   wobei R⁴ einen einwertigen, gegebenenfalls N- und/oder O-Atome enthaltenden Kohlenwasserstoffrest mit 1 bis 18 Kohlenstoffatomen und
   R⁵ einen zweiwertigen gegebenenfalls N- und/oder O-Atome enthaltenden Kohlenwasserstoffrest mit 3 bis 12 Kohlenstoffatomen bedeutet,
   in Gegenwart von Wasser (3)
   und Emulgator (4),
(b) Zugabe von wässrigen Kieselsäuredispersionen (5), gegebenenfalls im Gemisch mit Silanen (2) der Formel (II), entweder bei der Umsetzung (a) oder nach der Umsetzung (a), bevorzugt nach der Umsetzung (a),
(c) gegebenenfalls Zugabe von Haftvermittlern (6) entweder bei der Umsetzung (a) oder nach der Umsetzung (a), bevorzugt nach der Umsetzung (a),und
(d) gegebenenfalls Zugabe weiterer Stoffe (7), die an der Umsetzung (a) nicht teilnehmen, entweder bei der Umsetzung (a) oder nach der Umsetzung (a), bevorzugt nach der Umsetzung (a),
   mit der Maßgabe, dass keine Metall-haltigen Katalysatoren mitverwendet werden und dass die Organopolysiloxane (1) und Silane (2) in solchen Mengen eingesetzt werden, dass die Organopolysiloxane nach dem Entfernen des Wassers (3) elastomere Filme bilden, die in Toluol unlöslich sind.

Bei dem erfindungsgemäßen Verfahren kann die Umsetzung (a) sowohl vor dem Herstellen der Emulsion durchgeführt werden, als auch dadurch, dass zunächst das Organopolysiloxan (1) emulgiert wird, welches dann im Emulsionströpfchen mit dem Silan (2) reagiert.

Die erfindungsgemäßen Dispersionen enthalten schon vorvernetzte Organopolysiloxane, wobei nach dem Entfernen des Wassers elastomere Filme gebildet werden, die vernetzte Organopolysiloxane enthalten, die hochmolekulare verzweigte oder dendrimerartige hochverzweigte Strukturen aufweisen. An diesen elastomeren Filmen ist eine Viskositätsmessung nicht möglich. Die polymeren Siloxan-Netzwerke der elastomeren Filme sind typischerweise in organischen Lösemitteln, wie Toluol, unlöslich, quellen jedoch eventuell darin, was aber ebenfalls im Rahmen dieser Erfindung als unlöslich zu verstehen ist.
Dies steht im Gegensatz zu unvernetzten Organopolysiloxanen, die auch hochviskos sein können, bei denen aber eine Viskositätsmessung möglich ist und die in organischen Lösemitteln, wie Toluol, löslich sind.

Dass nach diesem Verfahren wässrige Dispersionen von vernetzten Organopolysiloxanen erhalten werden können, war überraschend, da in A. Adima et.al, Eur. J. Org. Chem. 2004, 2582-2588 beschrieben ist, dass sich α-Aminomethyltrialkoxysilane in Gegenwart von Wasser zu SiO₂ und dem entsprechenden methylierten Amin zersetzen.

Vorzugsweise sind die erfindungsgemäßen Dispersionen wässrige Suspensionen oder wässrige Emulsionen von vernetzten Organopolysiloxanen.

Die erfindungsgemäßen Dispersionen bilden beim Eintrocknen - ohne Katalysatorzugabe oder Veränderung des pH-Wertes - ein elastisches Siliconnetzwerk aus. Bei der Herstellung der erfindungsgemäßen vernetzten Organopolysiloxane werden vorzugsweise nur zwei (miteinander reagierende) Komponenten benötigt: OR¹-endständige Polyorganosiloxane (1) und Vernetzer (2). Diese Komponenten reagieren vorzugsweise bei Raumtemperatur miteinander. Zur Unterstützung dieser Reaktion werden keine Metall-haltigen zusätzlichen Katalysatoren benötigt. Die Reaktion verläuft ferner vorzugsweise im neutralen Bereich, d.h. im pH-Bereich von ca. 5 bis 9, der sich durch die Komponenten selbst ergibt. Durch die hohe Reaktivität ist ferner eine gezielt geführte chemische Umsetzung nicht nötig und vorzugsweise auch keine Erwärmung.

Die erfindungsgemäße Dispersion zeichnet sich durch ihre hohe Lagerstabilität, auch bei erhöhter Temperatur, und durch ihre hohe Scherstabilität aus. Das erfindungsgemäße Verfahren hat den Vorteil, dass Dispersionen mit hohem Festgehalt und Füllstoffgehalt erhalten werden können. Der Gehalt an nichtflüchtigen Stoffen in der Dispersion beträgt etwa 30 bis 99,9 Gew-%, bezogen auf das Gesamtgewicht der Dispersion, bevorzugt größer 50 Gew.-%.

Bei dem erfindungsgemäßen Verfahren werden keine Metall-haltigen Katalysatoren verwendet, d.h. es werden vorzugsweise keine Übergangsmetalle der VIII. Nebengruppe des Periodensystems und deren Verbindungen und keine Metalle der III., IV. und V. Hauptgruppe des Periodensystems und deren Verbindungen verwendet, wobei die Elemente C, Si, N, und P in dieser Definition nicht als Metalle gelten.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α-und der β-Phenylethylrest.

Bevorzugt sind als Rest R der Methyl-, Ethyl-, Octyl- und Phenylrest, besonders bevorzugt sind der Methyl- und Ethylrest.

Beispiele für Alkylreste R¹ sind die vorstehend bei R aufgeführten Alkylreste mit 1 bis 8 Kohlenstoffatomen.

Beispiele für Alkylreste R mit 1 bis 4 Kohlenstoffatomen gelten in vollem Umfang für Reste R².

Bevorzugte Beispiele für Reste R³ sind der Methyl- und Ethylrest.

Beispiele für Kohlenwasserstoffreste R, wie Alkyl-, Cycloalkyl-, Aryl-, Alkaryl- und Aralkylreste, gelten im vollen Umfang für Kohlenwasserstoffreste R⁴. Bevorzugte Beispiele für Alkylreste R⁴ sind Methyl-, Ethyl-, Butyl-, Hexyl-, und Octylreste, ein bevorzugtes Beispiel für Cycloalkylreste R⁴ ist der Cyclohexylrest.

Ein bevorzugtes Beispiel für R⁵ ist der Rest der Formel -CH₂-CH₂-O-CH₂-CH₂- .

Bevorzugte Beispiele für Reste Y sind der Morpholino-, Piperazino-, Piperidino- und der Cyclohexylaminorest.

Bei dem erfindungsgemäßen Verfahren werden als Organopolysiloxane (1) vorzugsweise solche der Formel (I) eingesetzt, bei denen 25 bis 100 %, vorzugsweise 50 bis 100 % aller Reste R¹ Wasserstoffatome sind.

Beispiele für Organopolysiloxane (1) sind handelsübliche Polydimethylsiloxane mit endständigen Silanolgruppen und Polydimethylsiloxane mit endständigen Alkoxygruppen.

Zur Herstellung dieser Dispersionen kann eine Art von Organopolysiloxan (1) oder verschiedene Arten von Organopolysiloxan (1) eingesetzt werden.

Die eingesetzten Organopolysiloxane (1) weisen vorzugsweise Viskositäten von 10 mPa.s bis 1.000.000 mPa.s bei 25°C, bevorzugt 50 mPa.s bis 30.000 mPa.s bei 25°C und besonders bevorzugt 100 mPa.s bis 10.000 mPa.s bei 25°C auf.

Es kann bei dem erfindungsgemäßen Verfahren zur Herstellung der Dispersion eine Art von Silan (2) oder verschiedene Arten von Silan (2) eingesetzt werden.
Bevorzugt ist der Rest -CR²₂-Y in Silan (2) der Formel (II) ein Reste der Formel -CH₂-Y.
Beispiele für Reste -CR²₂-Y in Silan (2) der Formel (II) sind der Aminomethyl-, Methylaminomethyl-, Dimethylaminomethyl-, Diethylaminomethyl-, Dibutylaminomethyl-, Cyclohexylaminomethyl-, Morpholinomethyl-, Piperidinomethyl-, Piperazinomethyl-,
((Diethoxymethylsilyl)methyl)cyclohexylaminomethyl-,
((Triethoxysilyl)methyl)cyclohexylaminomethyl-, Anilinomethyl-, 3-Dimethylaminopropyl-aminomethyl- und
Bis(3-dimethylaminopropyl)aminomethyl-Rest.

Beispiele für Silane (II) sind Dibutylaminomethyltriethoxysilan, Dibutylaminomethyltributoxysilan, Cyclohexylaminomethyltrimethoxysilan, Cyclohexylaminomethyltriethoxysilan, Anilinomethyltriethoxysilan, Morpholinomethyltriethoxysilan, Morpholinomethyltrimethoxysilan, Morpholinomethyltriisopropoxysilan, 3-Dimethylaminopropyl-aminomethyltrimethoxysilan, Ethylcarbamoylmethyltrimethoxysilan, Morpholinomethyltributoxysilan, Morpholinomethyltrialkoxysilan, wobei der Alkoxyrest ein C₁-C₄-Alkoxyrest ist, insbesondere ein Gemisch aus Methoxy- und Ethoxyrest ist, Bis-(dimethylaminopropyl)aminomethyl-triethoxysilan, Diisopropylaminomethyltriethoxysilan, Piperazinomethyltriethoxysilan, Piperidinomethyltriethoxysilan Bis-(diethoxymethylsilylmethyl)cyclohexylamin, Bis-(triethoxysilylmethyl)cyclohexylamin, Morpholinomethyltri(2-hydroxyethoxy)silan

Bevorzugt sind dabei Silane (2) der Formel (II), bei denen der Rest (R³O) - eine Ethoxy-Gruppe ist.

Die Silane (2) der Formel (II) können bis zu 30 Gew-% difunktionelle Silane der Formel

(R³O)₂RSiCR²₂-Y (III)

oder deren Hydrolysate
enthalten.
Das Silan der Formel (III) wirkt kettenverlängernd für Organopolysiloxane (1), stört die Vernetzungsreaktion von Silan der Formel (II) mit dem in der Kette verlängerten Organopolysiloxan (1) jedoch nicht. Es werden erfindungsgemäße vernetzte Organopolysiloxane erhalten.

Der Vernetzungsgrad hängt dabei vom eingesetzten Verhältnis der Äquivalente -OR³ in Silan (2) der Formel (II) zu -OR¹ in Organopolysiloxan (1) der Formel (I) ab.

Zur Herstellung der erfindungsgemäßen Dispersionen aus Organopolysiloxan (1) und Silan (2) wird Silan (2) oder dessen Hydrolysate dabei vorzugsweise in Mengen von mindestens 0,6 Äquivalente -OR³, bevorzugt mindestens 0,7 Äquivalente -OR³, besonders bevorzugt 0,6 bis 2 Äquivalente -OR³, insbesonders 0,65 bis 1 Äquivalent -OR³, insbesonders bevorzugt 0,7 bis 0,99 Äquivalente -OR³, je Äquivalent -OR¹ in Organopolysiloxan (1) eingesetzt, wobei R¹ in (1) bevorzugt ein Wasserstoffatom ist.

Die Vernetzungshäufigkeit hängt sowohl von den Kettenlängen der Organopolysiloxane (1), als auch von der Stöchiometrie der miteinander reagierenden SiOR¹-Gruppen des Organopolysiloxans
(1) und der SiOR³-Gruppen des Silans (2) ab. Hohe Vernetzungsgrade werden erreicht, wenn gleich viele der SiOR¹-Gruppen des Organopolysiloxans (1) und SiOR³-Gruppen des Silans
(2) miteinander reagieren. Verluste durch Flüchtigkeit oder Nebenreaktionen können hierzu ein stöchiometrisches Verhältnis abweichend von 1,0 : 1,0 erfordern. Falls gewünscht, kann ein stöchiometrischer Überschuss von SiOR³- aus Silan (2) zu SiOR¹-Gruppen aus Organopolysiloxan (1) eingesetzt werden. Überraschenderweise wurde festgestellt, dass auch bei einem stöchiometrischen Unterschuss von SiOR³- aus Silan (2) zu SiOR¹-Gruppen aus Organopolysiloxan (1), z.B. 0,7:1,0 , elastische Filme erzielbar sind.

Die Herstellung der erfindungsgemäßen Dispersionen erfolgt durch intensives Mischen von Organopolysiloxanen (1) mit Silanen (2),
Wasser (3), und
Emulgatoren (4), wässriger Kieselsäuredispersion (5), gegebenenfalls Haftvermittler (6) und gegebenenfalls weiteren Stoffen (7) miteinander. Die Herstellung kann diskontinuierlich oder kontinuierlich erfolgen, wie z.B. in DE 102004023911 A bzw. in WO 2005100453 beschrieben ist.

Technologien zur Herstellung von Dispersionen oder Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Obwohl die Silane (2) bekanntermaßen hydrolyseempfindliche Gruppen enthalten, besonders wenn R³ ein Wasserstoffatom oder ein Methyl- oder Ethylrest ist, werden selbst in Gegenwart von Wasser überraschenderweise vernetzte Organopolysiloxane durch Reaktion mit mehreren Organopolysiloxanen (1) erhalten.

Die Art der Mischung der Komponenten zur Herstellung der erfindungsgemäßen Dispersionen kann in verschiedener Reihenfolge ausgeübt werden. In Abhängigkeit von den Komponenten (1), (2), (3), (4), (5) und ggf. (6) und (7) können sich aber bevorzugte Vorgehensweisen ergeben, die im Einzelfall geprüft werden sollten.

Es können z.B. die Komponenten (1) und (2) miteinander vorgemischt werden, daraufhin der (oder die) Emulgator(en) (4) zugefügt und danach das Wasser (3) und die wässrige Kieselsäuredispersion (5) sowie ggf. weitere Stoffe (6) und (7) eingearbeitet werden. Es ist auch möglich, die Komponenten (1) und (2) sowie (3) bis (7) der Reihe nach in die Emulgierapparatur zu dosieren. In besonderen Fällen kann es z.B. aufgrund der Siloxanviskosität oder -reaktivität vorteilhaft sein, Silan (2) mit einem Organopolysiloxan (1) zu mischen und danach ein anderes Organopolysiloxan (1) einzuarbeiten, oder umgekehrt, je nachdem, wie sich günstigere rheologische Eigenschaften für die Verarbeitung der Komponenten ergeben.

Bei sehr reaktiven Silanen (2) kann es vorteilhaft sein, erst die Komponente (1) mit Emulgator (4) und dem Wasser (3) in eine steife Phase überzuführen, und danach das Silan (2) pur oder verdünnt in einem inerten Stoff (7) einzudosieren, bevor ggf. weiter mit Wasser verdünnt wird.

Desweiteren ist es auch möglich, Silan (2) in die fertige Emulsion von Organopolysiloxanen (1) zu geben, um so die gewünschte Reaktion und Vernetzung des Organopolysiloxans (1) in der Emulsion zu erreichen. Ferner kann das Silan (2) zuvor durch Zugabe von Wasser teilweise oder vollständig hydrolysiert werden. Um VOC-freies Hydrolysat von Silan (2) zu erhalten, kann das Nebenprodukt Alkohol R³OH durch geeignete bekannte Maßnahmen wie Destillation, Membranverfahren oder andere Trennverfahren teilweise oder vollständig entfernt werden.

Bei dem erfindungsgemäßen Verfahren wird Wasser (3), in Mengen von vorzugsweise 0,1 bis 70 Gew.-%, besonders bevorzugt 0,1 bis 25 Gew.-%, jeweils bezogen auf das Gesamtgewicht aller Inhaltsstoffe der Dispersion eingesetzt.

Vorzugsweise kann das Verfahren zur Herstellung von Dispersionen kontinuierlich durchgeführt werden. Dabei werden vorzugsweise die zur Herstellung der Dispersion benötigen Organopolysiloxane (1) kontinuierlich hergestellt und kontinuierlich zur Emulgierapparatur weitergeleitet, und vor der Emulgierung kontinuierlich mit Silanen (2), Emulgatoren (4) und zumindest einem Teil des Wassers als Dispergiermittel (3) vermischt, und diese Mischung wird direkt und kontinuierlich einem ersten hochscherenden Mischer zugeführt und in diesem Mischer wird eine viskose Phase gebildet, wobei der Druck und die Temperatur nach diesem Mischer gemessen und so eingeregelt werden, dass eine qualitativ hochwertige und möglichst feinteilige Dispersion entsteht. Die wässrige Kieselsäuredispersion (5), Haftvermittler (6) und weitere Stoffe (7) können vor oder nach dem ersten hochscherenden Mischer zugegeben werden. Gegebenenfalls kann die Emulsion nach dem ersten hochscherenden Mischer durch Einmischen von Wasser weiter verdünnt werden.

Bei dem erfindungsgemäßen Verfahren können als Emulgatoren (4) alle bisher bekannten, ionischen und nicht-ionischen Emulgatoren sowohl einzeln als auch als Mischungen verschiedener Emulgatoren eingesetzt werden, mit denen auch bisher wässrige Dispersionen, insbesondere wässrige Emulsionen von Organopolysiloxanen hergestellt werden konnten.

Beispiele für anionische Emulgatoren sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Beispiele für nichtionische Emulgatoren sind:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 3 bis 40 EO-Einheiten und Alkylresten von 8 bis 20 C-Atomen.
7. Alkylarylpolyglycolether, vorzugsweise solche mit 5 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R*-O-Z_{O}, worin R* einen linearen oder verzweigten, gesättigten oder ungesättigten Alkylrest mit im Mittel 8 - 24 C-Atomen und Z_{O} einen Oligoglykosidrest mit im Mittel o = 1 - 10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

Beispiele für kationische Emulgatoren sind:
14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:
17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammonium-salze mit einem C₈-C₁₈-Acylrest und Alkyl-imidazolium-Betaine.

Bevorzugt als Emulgatoren sind nichtionische Emulgatoren, insbesondere die vorstehend unter 6. aufgeführten Alkylpolyglycolether
Der Bestandteil (4) kann aus einem der o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.

Bei dem erfindungsgemäßen Verfahren werden die Emulgatoren (4) in Mengen von vorzugsweise 0,01 bis 60 Gew.-%, besonders bevorzugt 0,02 bis 30 Gew.-%, jeweils bezogen auf das Gesamtgewicht an Organopolysiloxanen (1) und Silanen (2), eingesetzt.

Falls das Organopolysiloxan (1) oder das Silan (2) bzw. das entstehende vernetzte Organopolysiloxan selbst als Emulgator wirkt, kann auf den Zusatz von separatem Emulgator (4) verzichtet werden.

Die bei dem erfindungsgemäßen Verfahren eingesetzte wässrige Kieselsäuredispersion (5) ist bevorzugt eine Dispersion eines hydrophilen oder teilweise hydrophobierten Siliciumdioxids, hergestellt durch Flammenhydrolyse (pyrogen hergestellte Kieselsäure) oder durch Fällung aus wässriger Lösung (gefällte Kieselsäure) vorzugsweise charakterisiert durch einen Kohlenstoffgehalt des Siliciumdioxids von 0% bis 10% und einer BET-Oberfläche von 50 - 500 m²/g. Zur Hydrophobierung des Siliciumdioxids können die dafür bekannten Verfahren eingesetzt werden. Der Feststoffgehalt der wässrigen Kieselsäuredispersion liegt vorzugsweise bei 15 Gew.-% bis 80 Gew.-%, bevorzugt bei 25 Gew.-% bis 60 Gew.-%. Die Kieselsäure kann auch kurz vor oder während der Zugabe (b) der Kieselsäuredispersion konditioniert bzw. hydrophobiert werden, indem organische Amine, Silane oder Siloxane, wie Aminosilane oder Aminosilicone, zugegeben werden.
Bevorzugt werden hierbei erfindungsgemäße Silane (2) zuzugeben. Erfindungsgemäße Silane (2) werden dabei in Mengen von etwa 0,3 bis 5,0 Gew.-%, bezogen auf das Gesamtgewicht der eingesetzten Kieselsäuredispersion (5) zugegeben.
Insbesondere bei Kieselsäuredispersionen mit einem höheren Feststoffgehalt von 25 bis 60 Gew.-% ist es vorteilhaft erfindungsgemäße Silane (2) zuzugeben. Hierbei werden auch bei Einsatz von Kieselsäuredispersionen mit hohen Feststoffgehalten transparente Elastomere erhalten.

Bei dem erfindungsgemäßen Verfahren werden wässrige Kieselsäuredispersionen (5) in solchen Mengen zugegeben, dass vorzugsweise 2 bis 30 Gew.-%, bevorzugt 5 bis 20 Gew.% an Kieselsäure, jeweils bezogen auf die Gesamtmenge an Organopolysiloxane (1) und Silan (2), in der Dispersion vorhanden sind.

Bei dem erfindungsgemäßen Verfahren können Haftvermittler (6) zugegeben werden, um die Haftung der aus den erfindungsgemäßen Dispersionen erhaltenen Elastomere auf Substrate, auf die sie aufgebracht wurden, zu verstärken. Es können dabei alle nach dem bisherigen Stand der Technik bereits bekannte Haftvermittler, wie funktionelle Silane, zum Beispiel 3-aminopropyl-funktionelle, 3-methacryloxy-propyl-funktionelle, oder 3-glycidoxy-propyl-funktionelle Alkoxysilane, sowie Co-Polymere enthaltend Methacrylate und/oder Epoxide eingesetzt werden.

Weitere Beispiele für Haftvermittler sind handelsübliche funktionalisierte Siloxane, wie Aminöle, z.B. Aminöle mit 3-(2-Aminoethyl)aminopropylfunktionen oder Aminopropylfunktionen, Epoxy-funktionalisierte Siloxane wie z.B. glycidoxysubstituierte Polydimethylsiloxane, oder Harze, wie z.B. Siliconharze oder Epoxidharze, wobei die Siloxane teilweise Silanol- und auch Alkoxygruppen enthalten, oder Latexdispersionen wie z.B. SBR-Latex-Dispersion.
Die haftvermittelnden Zusätze können entweder in Substanz, als wässrige Lösung oder als Emulsion in Wasser zugesetzt werden.

Bei dem erfindungsgemäßen Verfahren können Haftvermittler (6) in Mengen von vorzugsweise 0,1% bis 3%, bevorzugt 0,3% bis 1%, jeweils bezogen auf die Gesamtmenge an Organopolysiloxane (1) und Silan (2), in der Dispersion eingesetzt werden.

Die Dispersionen können als Dispersionen unverdünnter vernetzter Organopolysiloxane hergestellt werden, jedoch empfiehlt sich manchmal aus Handhabungsgründen eine Verdünnung mit organischen Lösungsmitteln oder niedrig viskosen Oligomeren/Polymeren.

Beispiele für weitere Stoffe (7), die an der Umsetzung (a) nicht teilnehmen und die beim erfindungsgemäßen Verfahren zugegeben werden können, sind nicht wassermischbare Flüssigkeiten, wie Toluol, technische Benzinfraktionen sowie aromatenfreie Kohlenwasserstoffgemische mit Siedebereichen zwischen 250°C bis 400°C oder aromatenhaltige Kohlenwasserstoffe, wie beispielsweise Dodecylbenzol oder Didodecylbenzol, und niedrig viskose Oligomere/Polymere, bevorzugt Siloxane, wie Dimethylpolysiloxane, und weitere Silane oder Silicone in Form von Ölen oder Harzen.
Ferner können als weitere Stoffe (7) wassermischbare Flüssigkeiten, wie Alkohole, Glykole oder silicon- oder nicht siliconhaltige Emulsionen oder Dispersionen zugegeben werden.

Beispiele für weitere Stoffe (7), die an der Umsetzung (a) nicht teilnehmen und die beim erfindungsgemäßen Verfahren zugegeben werden können, sind wasserunlösliche Feststoffe, wie nicht verstärkende Füllstoffe, also Füllstoffe mit einer BET-Oberfläche von weniger als 50 m²/g, wie Pulver aus Quarz, Kreide, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide oder Titandioxid, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver, und Glas- und Kunststoffhohlkugeln.

### Beispiel für weitere Stoffe (7), die an der Umsetzung (a) nicht teilnehmen, sind Fasern wie Glas-, Kohle- und Keramikfasern

Ferner können als weitere Stoffe (7) handelsübliche Konservierungsmittel für Dispersionen, wie z.B. Isothiazolinone, Parabene oder Formaldehyd bzw. deren wässrige Formulierungen, zugesetzt werden.

Der Emulgiervorgang zur Herstellung der Dispersion wird vorzugsweise bei Temperaturen unter 120°C, bevorzugt bei 5°C bis 100°C, besonders bevorzugt bei 10°C bis 80°C durchgeführt. Die Temperaturerhöhung kommt vorzugsweise durch den Eintrag mechanischer Scherenergie, die für den Emulgierprozess benötigt wird, zustande. Die Temperaturerhöhung wird nicht zur Beschleunigung eines chemischen Prozesses benötigt. Weiterhin wird das erfindungsgemäße Verfahren vorzugsweise beim Druck der umgebenden Atmosphäre durchgeführt, kann aber auch bei höheren oder niederen Drücken durchgeführt werden.

Das erfindungsgemäße Verfahren hat den Vorteil, dass es ohne Zusatz von Katalysatoren, insbesondere ohne Zusatz von Metallkatalysatoren abläuft. Die Umsetzung von Organopolysiloxan (1) mit Silan (2) läuft vorzugsweise in wenigen Minuten bis mehreren Stunden vollständig ab, wobei auch hier Methoxysilane schneller als Ethoxysilane reagieren. Die Kondensation kann durch Säuren und Basen beschleunigt werden, was aber nicht bevorzugt ist.

Die bei dem erfindungsgemäßen Verfahren als Kondensationsnebenprodukte anfallenden Alkohole können im Produkt verbleiben oder auch entfernt werden, beispielsweise durch Destillation unter Vakuum, Membranverfahren, oder durch Extraktion.

Die mittels Lichtstreuung in den Dispersionen gemessene mittlere Teilchengröße liegt im Bereich 0,001 bis 100 µm, bevorzugt bei 0,002 bis 10 µm.
Die pH-Werte können von 1 bis 14 variieren, bevorzugt 3 bis 9, besonders bevorzugt 5 bis 9.

Die erfindungsgemäßen Dispersionen sind weiterhin lagerstabil.

Gegenstand der Erfindung ist die Verwendung der erfindungsgemäßen Dispersionen als Dichtungs- oder Beschichtungsmassen.

Für die Verwendbarkeit als Dichtungsmasse ist es desweiteren erforderlich, dass die ausgehärteten Produkte einen niedrigen Modul besitzen, bevorzugt ist eine Spannung bei 100% Dehnung von kleiner 0,4 MPa.
Überraschenderweise wurde gefunden, dass es nach dem erfindungsgemäßen Verfahren in einfacher Art und Weise möglich ist trotz Einsatz von verhältnismäßig niedermolekularen Polymeren zu niedermoduligen Elastomeren zu kommen, was normalerweise nicht möglich ist.

Gegenstand der Erfindung sind weiterhin Formkörper herstellbar durch Entfernung des Wassers (3) aus den erfindungsgemäßen Dispersionen, vorzugsweise Emulsionen.
Vorzugsweise wird dabei das Wasser durch Trocknen lassen der erfindungsgemäßen Dispersionen bei einer Temperatur von 1 bis 200 °C, bevorzugt 5 bis 150 °C, besonders bevorzugt im Temperaturbereich 5 bis 40°C, entfernt.

Die Hautbildungszeit beträgt vorzugsweise 5 min bis 40 min. Die Zeit bis zur Klebfreiheit der Oberfläche beträgt vorzugsweise 30 min bis 24 h.

Bei den Formkörpern handelt es sich um elastomere Formkörper, wie elastische Filme oder Dichtungen.
Die erfindungsgemäßen Dispersionen haben den Vorteil, dass nach Entfernen des Wassers Elastomere, wie elastische Filme, erhalten werden, die transparent sind.

Die erfindungsgemäßen Dispersionen können in üblicher Art und weise als Dichtmassen zwischen zwei gleichen oder unterschiedlichen Substraten verwendet werden.
Beispiele für solche Substrate sind Glas, Aluminium, Edelstahl, Beton, PVC, PMMA, Polycarbonat.

Bei einer Verwendung als Beschichtungsmasse verbleiben sie im wesentlichen auf der Oberfläche des Substrats.

Gegenstand der Erfindung ist ein Verfahren zur Herstellung von elastischen Filmen, dadurch gekennzeichnet, dass die erfindungsgemäße wässrige Dispersion, auf ein Substrat aufgetragen wird und das Wasser entfernt wird.

Das Auftragen der Dispersionen auf die zu beschichtenden Substrate kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder RakelBeschichtung oder mittels einer Luftbürste.

Die Schichtdicke auf dem zu beschichtenden Substrat /Fasern beträgt vorzugsweise 0,01 bis 10.000 µm, besonders bevorzugt 0,1 bis 100 µm.

Beispiele für Substrate, die mit den Dispersionen nach dem erfindungsgemäßen Verfahren beschichtet werden können, sind künstliche oder natürliche Steine wie z.B. Beton, Kalksandstein, Marmor, Sandstein.

### Prüfung der Filmbildung:

Zur Prüfung der Filmbildung wird die Menge Emulsion in eine Alu-Schale mit 7 cm Durchmesser eingewogen, die nach dem Trocknen ca. 5 g Rückstand ergibt. Bei einer 50%-igen Emulsion sind dies ca. 10 g Einwaage. Die Emulsion wird gleichmäßig in der Alu-Schale verteilt, ggf. durch Zugabe von Verdünnungswasser. Diese Probe wird offen im Abzug ca. 24 h bei Raumtemperatur stehen gelassen. Es bildet sich ein ca. 1 mm dicker Film, der auf seine Löslichkeit in Toluol geprüft wird.

### Shore-A-Härte:

Die Shore-A-Härte wurde nach DIN (Deutsche Industrie Norm) 53505 (Ausgabe August 2000) bestimmt.

### Zugfestigkeit, Reißdehnung und Modul:

Zugfestigkeit, Reißdehnung und Modul (Spannung bei 100% Dehnung) wurden nach DIN 53504 (Ausgabe Mai 1994) an Probekörpern der Form S2 bestimmt. Um diese Werte bestimmen zu können, wurden die Produkte als 2mm dicker Film auf einer PTFE-Unterlage ausgestrichen. Nach 24h Lagerung bei 23°C und 50% relativer Luftfeuchtigkeit wurden die Filme von der Unterlage abgelöst und so aufgehängt das die Luft von allen Seiten zutreten konnte, so dass sie weitere 6 Tage bei 23°C und 50% relativer Luftfeuchtigkeit aushärten konnten. Aus diesen Filmen wurden anschließend die Probekörper nach oben genannter Norm ausgestanzt.

### Hautbildungszeit:

Zur Bestimmung der Hautbildungszeit wurde eine Probe der Paste ausgestrichen, bei 23°C und 50% relativer Luftfeuchtigkeit gelagert. Alle 5 min wurden durch Berühren der Oberfläche mit dem Zeigefinger der rechten Hand geprüft, ob sich eine oberflächliche gummielastische Haut gebildet hat.

### Klebfreiheit:

Die Zeit bis zur Klebfreiheit ist die Zeit, ab der sich die Oberfläche der Prüfkörper, die zur Bestimmung der Hautbildungszeit benutzt wurden, trocken und klebfrei anfühlte.

### Beispiel 1:

In einem Ultra-Turrax T 50 Emulgiergerät (Fa. Janke & Kunkel / IKA) wird aus 5 g Isotridecyldecaethoxylat, 85 %ig in Wasser, käuflich erwerblich unter dem Handelsnamen Lutensol TO 109 (Fa. BASF), und 8 g entsalztes Wasser ein Emulgatorgemisch hergestellt, zu dem 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm als Siloxan (1) und 0,39 g N-Morpholinomethyl-triethoxysilan (Molmasse 263,4) als Silan (2), dosiert wird. Es wird dann mit insgesamt 90,1 g vollentsalztem Wasser portionsweise verdünnt, worauf man eine milchig-weiße Emulsion mit einer durchschnittlichen Teilchengröße von 309 nm erhält. Der Festgehalt der Emulsion beträgt 50,7 %, der pH-Wert 6,0. Die Emulsion ist auch nach 6-monatiger Lagerung bei Raumtemperatur homogen und stabil.

Werden 0,5 g dieser Emulsion in 8 g Tetrahydrofuran eingegossen, so entsteht sofort ein Niederschlag des vernetzten und in THF unlöslichen Organopolysiloxan-Elastomers. Der Niederschlag löst sich auch innerhalb 24 h nicht auf.

In 100 g dieser Emulsion werden 27 g einer 15 %igen wässrigen Dispersion von einer pyrogen erzeugten Kieselsäure (BET-Oberfläche 150 m²/g) homogen eingemischt. Die Kieselsäuredispersion ist bei der Fa. Wacker Chemie AG unter der Bezeichnung HDK® KD150 erhältlich.

Durch Eindampfen der Mischung wird nach einer Trockenzeit von 24h/25°C ein gelartig elastischer, auf Glas oder Aluminium gut haftender transparenter Film erhalten.

### Beispiele 2 bis 4:

Weitere Emulsionen werden analog Beispiel 1 hergestellt, wobei die in Tabelle 1 angegebenen Mengen verwendet werden.

**Tabelle 1:**

| Beispiel | Siloxan (1) in g | Silan (2) in g | Fest-gehalt (%) | pH | Teilchengröße (nm) | Filmbeurteilung nach Trocknung 24 h/25°C |
|---|---|---|---|---|---|---|
| B2 | 99,56 | 0,44 | 50,5 | 7 | 478 | sehr elastisch, transparent |
| B3 | 99,40 | 0,60 | 49,9 | 7 | 481 | elastisch, transparent |
| B4 | 99,22 | 0,79 | 50,5 | 6,5 | --- | elastisch, opak |

Der angegebene Festgehalt, pH-Wert und die Teilchengröße werden vor Zugabe der Kieselsäuredispersion bestimmt.

Der Festgehalt wird bestimmt bei 150 °C bis zur Gewichtskonstanz mit Gerät: Mettler Toledo HR 73.

Die Teilchengrößen werden bestimmt mit Coulter N4 plus.

Die Elastizität der aus der Emulsion (ohne Zugabe der Kieselsäuredispersion) hergestellten Filme nimmt mit zunehmender Menge an Silan (2) von B1 nach B4 ab.

Der aus Dispersion B3 hergestellte Elastomerfilm wird auseinandergeschnitten und 24 h in Toluol eingelegt. Die Schnittkanten sind danach immer noch scharf ausgebildet. Der Film ist gequollen, aber in Toluol unlöslich, d.h. die Siloxane sind vernetzt.

In je 100 g der Emulsion aus Beispiel 2-4 werden 27 g einer 15 %igen wässrigen Dispersion von einer pyrogen erzeugten Kieselsäure (BET-Oberfläche 150 m²/g) homogen eingemischt. Die Kieselsäuredispersion ist bei der Fa. Wacker Chemie AG unter der Bezeichnung HDK® KD150 erhältlich.
Durch Trocknenlassen der Dispersion bei Raumtemperatur wird ein elastischer Film erhalten, der eine höhere Transparenz und Festigkeit aufweist, als der Film, der aus der Kieselsäure-freien Emulsion erhalten wird. Der Siliconfilm ist in Toluol unlöslich.
Vergleichsversuch 1a - 1f zu EP 828 794 A und EP 655 475 A1:

Die Arbeitsweise von Beispiel B3 wird wiederholt mit der Abänderung, dass 0,60 g Morpholinomethyltriethoxysilan, das erfindungsgemäße Silans (2), durch die in der Tabelle 2 angegebene Komponente ersetzt wird:
Vergleich 1a:
   0,60g Vinyltrimethoxysilan (VTMO) gemäß Beispiel 1 von EP 828 794 A
Vergleich 1b:
   0,34 g Vinyltrimethoxysilan (Molmasse 148,2)
   (0,34 g = 1,1 Äquivalente Si-OCH₃ des Vinyltrimethoxysilans bezogen auf 1 Äquivalent SiOH des Siloxans (1) analog Beispiel B3)
Vergleich 1c:
   0, 60 g α,ω-Dimethoxypoly(N-(2-aminoethyl)-3-aminopropylmethylsiloxan) gemäß Beispiel 1 von EP 828 794 A.
Vergleich 1d:
   0,60 g eines Harzgemisches gemäß Beispiel 1 von EP 655 475 A1 bestehend aus 16 Teilen Organopolysiloxanharz der Formel [(CH₃)₃SiO_{1/2}] [SiO₂] mit einem durchschnittlichen Molekulargewicht von 2000 und einem durchschnittlichen Ethoxygehalt von 2,1 Gewichtsprozent, bezogen auf das Harzmolekül, und 17 Teilen Organopolysiloxanharz der Formel [(CH₃)₂SiO]_{0,2}[(CH₃)SiO_{3/2}]_{0,8} mit einem durchschnittlichen Molekulargewicht von 3000 und einem durchschnittlichen Ethoxygehalt von 2,6 Gewichtsprozent, bezogen auf das Harzmolekül.
Vergleich 1e:
   Analog Vergleich V 1d mit der Abänderung, dass zu dem Harzgemisch KOH zugegeben wird und der pH-Wert 11 beträgt.
Vergleich 1f:
   0,60 g eines 1:1 Gemisches von Vinyltrimethoxysilan (VTMO) und α,ω-Dimethoxypoly(N-(2-aminoethyl)-3-aminopropylmethylsiloxan) gemäß Beispiel 1 von EP 828 794 A.

Die Ergebnisse sind in der Tabelle 2 zusammengefasst:

**Tabelle 2:**

| Vergleich | Siloxan (1) in g | Ersatz von Silan (2) | | pH | Aussehen der getrockneten Emulsion nach | |
|---|---|---|---|---|---|---|
| | | in g | durch | | 24 h/23°C | 7 Tage/23°C |
| 1a | 99,40 | 0,60 | VTMO¹⁾ | 5 | ölig, dünn, klar | ölig, dünn, klar |
| 1b | 99,40 | 0,34 | VTMO¹⁾ | 5 | ölig, dünn, klar | ölig, dünn, klar |
| 1c | 99,40 | 0,60 | GF95-H²⁾ | 10 | ölig, dünn, trüb | ölig, dünn, trüb |
| 1d | 99,40 | 0,60 | Harz³⁾ | 5 | ölig, dünn, trüb | ölig, dünn, trüb |
| 1e | 99,40 | 0,60 | Harz³⁾ + KOH bis pH 11 | 11 | ölig, dünn, trüb | ölig, dicker, trüb |
| 1f | 99,40 | 0,60 | VTMO¹⁾ + GF95-H²⁾ | 9 | ölig, dünn, trüb | ölig, dicker, trüb |

| | | | | | | |
|---|---|---|---|---|---|---|
| ¹⁾ Vinyltrimethoxysilan ²⁾ GF95-H: α,ω-Dimethoxypoly(N-(2-aminoethyl)-3-aminopropylmethylsiloxan) ³⁾ Harzgemisch aus Beispiel 1 von EP 655 475 A1 (siehe Beschreibung oben unter Vergleich 1d)) | | | | | | |

Alle Emulsionen bilden beim Trocknen keinen Film. Die zurückbleibenden öligen Silicone sind in Toluol löslich (geprüft als 20 %ige Lösung in Toluol), d.h. sie sind nicht vernetzt.

### Vergleichsversuch 2:

Es wurde der Viskositätsanstieg nach dem Vermischen der Komponenten Siloxan (1) und Silan (2) gemäß Beispiel B3, d.h. α,ω-Dihydroxypolydimethylsiloxan mit Morpholinomethyltriethoxysilan, gemessen.
Im Vergleich dazu wurde Morpholinomethyltriethoxysilan durch die in der Tabelle 3 angegebene Komponente in V2a - V2f (analog den Vergleichsversuchen V1a - V1f) ersetzt und ebenfalls der Viskositätsanstieg gemessen.
Die Ergebnisse sind in Tabelle 3 zusammengefasst.

Während die Viskosität bei Verwendung der erfindungsgemäßen Komponenten (1) und (2) rasch ansteigt, sich nach 2 Stunden verdoppelt hat und nach 5 Stunden schon nicht mehr messbar ist, da sich ein Elastomer gebildet hat, steigt die Viskosität bei den Vergleichsversuchen V2a - V2f nur sehr langsam an und es bilden sich selbst nach 7 Tagen noch keine vernetzten Elastomerpartikel aus.

**Tabelle 3: Messung des Viskositätsanstiegs**

| Vergleich | Siloxan (1) in g | Ersatz von Silan (2) | | Viskosität bei 23°C gemessen mit Brookfield [mPa·s] | | | | |
|---|---|---|---|---|---|---|---|---|
| | | in g | | sofort nach dem Mischen | nach 2 h | nach 24 h | nach 2 Tagen | nach 6 Tagen |
| V2a | 99,40 | 0,60 | VTMO¹⁾ | 5410 | 5740 | 5680 | 5720 | 5810 |
| V2c | 99,40 | 0,60 | GF95-H²⁾ | 6100 | 6240 | 6200 | 6200 | 6390 |
| V2d | 99,40 | 0,60 | Harz³⁾ | 5860 | 5980 | 5960 | 5950 | 6020 |
| V2e | 99,40 | 0,60 | Harz³⁾ + KOH bis pH 11 | 5950 | 6530 | 7480 | 7960 | 9280 |
| V2f | 99,40 | 0,60 | VTMO¹⁾ + GF95-H²⁾ | 5810 | 6580 | 8710 | 12650 | 36700 |
| analog Beispiel 3 | 99,40 | 0,60 | erfindungs-gemäß: Morpholino- methyltriethoxysilan | 350000 | 736000 | nicht messbar, vernetzt, elastisch | nicht messbar, vernetzt, elastisch | nicht messbar, vernetzt, elastisch |

| | | | | | | | | |
|---|---|---|---|---|---|---|---|---|
| Siloxan (1) = Polydimethylsiloxandiol mit einem Gehalt an terminalen OH-Gruppen von 1100 Gew.-ppm | | | | | | | | |

### Beispiel 5:

In einem Ultra-Turrax T 50 Emulgiergerät (Fa. Janke & Kunkel / IKA) wird aus 2,5 g Isotridecyldecaethoxylat (Lutensol TO 109, Fa. BASF), und 8 g Wasser ein Emulgatorgemisch hergestellt, zu dem 99 g eines frisch hergestellten homogenen Siloxan-/Silangemisches aus 98,56 g Polydimethylsiloxandiol mit einem Gehalt an terminalen OH-Gruppen von 1100 Gew.-ppm als Siloxan (1), und 0,44 g N-Morpholinomethyl-triethoxysilan als Silan (2) dosiert wird. Es wird dann mit insgesamt 8,9 g Wasser portionsweise verdünnt, worauf man eine pastenartige, standfeste, milchig-weiße Emulsion erhält. Der Festgehalt der Emulsion beträgt 86,3%.
Zu dieser Emulsion werden als Komponente (5) 32 g einer 25%igen wässrigen Dispersion von einer pyrogen erzeugten Kieselsäure (BET-Oberfläche 300 m²/g) homogen eingemischt. Die Kieselsäuredispersion ist bei der Fa. Wacker Chemie AG unter der Bezeichnung HDK® D3025 erhältlich. Die Emulsionspaste ist auch nach 8-monatiger Lagerung bei Raumtemperatur homogen und stabil.

Durch Eindampfen der Emulsion bei 25°C tritt bereits nach 25 Minuten Hautbildung ein, nach 5 Stunden ist nahezu ein kompakter Film entstanden. Nach 24h/25°C wird ein elastischer, transluzenter auf Glas, Papier oder Aluminium haftender, klebfreier Film erhalten. Der Film ist in Toluol unlöslich.
Die Messwerte betragen: Reißdehnung 680 %, Spannungswert bei 100 % Dehnung 0,11 MPa).
Die Emulsionspaste ist als Fugendichtmasse geeignet.

### Beispiel 6:

In einem Ultra-Turrax T 50 Emulgiergerät (Fa. Janke & Kunkel / IKA) wird aus 9,1 g Isotridecyldecaethoxylat (Lutensol TO 109, Fa. BASF), und 29,2 g Wasser ein Emulgatorgemisch hergestellt, zu dem 361,6 g eines frisch hergestellten homogenen Siloxan-/Silangemisches aus 360 g Polydimethylsiloxandiol als Siloxan (1), und 1,6 g N-Morpholinomethyl-triethoxysilan als Silan (2) dosiert und eingemischt wird. Es entsteht eine pastenartige, standfeste, milchig-weiße Emulsion. Der Festgehalt der Emulsion beträgt 92,1 %. Die Emulsionspaste ist auch nach 8-monatiger Lagerung bei Raumtemperatur homogen und stabil.

In 434,0 g dieser so hergestellten Dispersion werden als Komponente (5) 111,0 g einer wässrigen, teilhydrophobierten Kieselsäure-Dispersion mit 30,6 % Festgehalt, die nach EP 1433749 A1 hergestellt wird, und 2,85 g N-Morpholinomethyltriethoxysilan homogen eingearbeitet. Der Festgehalt der Emulsion beträgt 80,2 % und der pH-Wert 8,5. Die Gesamtmischung wird entlüftet und in eine Kartusche abgefüllt, und ist mehr als 6 Monate lagerstabil.

Es wird ein 2 mm dicker Film auf PTFE-Folie aufgestrichen. Durch Entfernen des Wassers bei 25°C tritt bereits nach 15 Minuten Hautbildung ein. Der Film ist nach 1 h klebfrei.
Die Messwerte betragen: Reißdehnung 549 %, Modul bei 100 % Dehnung 0,22 MPa, Shore-A-Härte 13, Zugfestigkeit 0,89 MPa.
Die Emulsionspaste ist als Fugendichtmasse geeignet.

Der Kieselsäure-haltige Siliconfilm weist eine höhere Transparenz und Festigkeit auf, als der Film, der aus der Kieselsäure-freien Emulsion erhalten wird. Der Siliconfilm haftet auf Glas, Papier oder Aluminium und ist in Toluol unlöslich.

### Beispiel 7:

Analog Beispiel 1 wird eine Dispersion unter Verwendung folgender Komponenten hergestellt:
2,5 g Isotridecyldecaethoxylat (Lutensol TO 109, Fa. BASF);
8 g vollentsalztes Wasser;
100,55 g eines Siloxan-/Silangemisches, frisch hergestellt aus 97,5 g Siloxan (1) (Polydimethylsiloxandiol mit einem Gehalt an terminalen OH-Gruppen von 740 Gew.-ppm),
0,55 g N-Morpholinomethyltriethoxysilan als Silan (2), zusätzlich als Komponente (6) 2,5 g N-(2-Aminoethyl)(3-aminopropyl)-methyldimethoxysilan und
90,1 g vollentsalztes Wasser.
Es entsteht eine milchig-weiße Emulsion. Der Festgehalt der Emulsion beträgt 52,7 %, der pH-Wert 8,5. Die Emulsion ist auch nach 3-monatiger Lagerung bei Raumtemperatur homogen und stabil.
In 100 g dieser so hergestellten Dispersion werden als Komponente (5) 26 g einer wässrigen, teilhydrophobierten Kieselsäure-Dispersion mit 30,6 % Festgehalt, die nach EP 1433749 A1 hergestellt wird, und 0,73 g N-Morpholinomethyltriethoxysilan homogen eingearbeitet. Der Festgehalt der Emulsion beträgt 48 %, der pH-Wert 8,5. Die Gesamtmischung ist mehr als 8 Monate lagerstabil.

Durch Trocknen bei Raumtemperatur entsteht ein elastomerer, transluzenter Kieselsäure-haltiger Siliconfilm, der in Toluol unlöslich ist.

Die Masse ist als Dichtmasse geeignet und zeigte folgende Eigenschaften:
Hautbildungszeit 15min, Klebfreiheit 1h, Shore-A-Härte 13, Zugfestigkeit 0,84 MPa, Reißdehnung 550%, Spannung bei 100% Dehnung (Modul) 0,22 MPa.

### Beispiel 8:

0,25 g einer 10%igen Lösung von Natriumlaurylsulfat in Wasser und 3,3 g entsalztes Wasser werden durch Schütteln mit Hilfe eines Vortex Genius 3 (Fa. IKA) aufgeschäumt. Unter Schütteln wird dazu portionsweise ein Gemisch bestehend aus 46,5 g Polydimethylsiloxandiol mit einem Gehalt an terminalen OH-Gruppen von 1100 Gew.-ppm, als Siloxan (1), sowie 0,25 g N-Morpholinomethyltriethoxysilan als Silan (2) einemulgiert. Nach ca. 20 g Zugabe dieses Gemisches wird die entstehende Emulsion dickflüssig, und es wird mit einem scherarmen Flügelrührer weiter emulgiert, bis das gesamte Siloxan-/Silangemisch eingearbeitet ist. Danach wird durch weitere Wasserzugabe der Wassergehalt auf 12 Gew.% eingestellt. Die Größe der erhaltenen Emulsionströpfchen liegt im Bereich von ca. 1 bis 30 µm (bestimmt mit Lichtmikroskop). Dann werden als Komponente (5) 15 g einer wässigen Kieselsäure-Dispersion mit 25 Gew.% Festgehalt, die nach EP 1433749 A1 hergestellt wird, und 0,14 g N-Morpholinomethyltriethoxysilan homogen eingearbeitet. Nach Abtrocknen des Wassers entsteht ein transluzenter, elastischer, in Toluol unlöslicher Film. Die Dispersion ist als Dichtstoff geeignet.

### Vergleichsversuch 3:

Beispiel 1 wird sinngemäß wiederholt mit dem Unterschied, dass statt des in Beispiel 1 verwendeten Siloxan-Polymer/Silangemisches nun 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm und 0,59 g N(2-Aminoethyl)(3-aminopropyl)trimethoxysilan, dosiert werden. Es folgt die identische Verdünnung mit Wasser, worauf man eine milchig-weiße, homogene Emulsion mit einer durchschnittlichen Teilchengröße von 362 nm und einem pH von 7 erhält. Danach wird wie in Beispiel 1 die Kieselsäuredispersion eingemischt.

Nach 24h/25°C Trockenzeit entsteht ein opaker Ölfilm, jedoch kein elastischer Film, auch nicht nach 7 Tagen Trockenzeit. Der Ölfilm ist in Toluol löslich.
Vergleichsversuch 4 gemäß DE 102004038148 A1:

In einem Ultra-Turrax Emulgiergerät T 50 (Fa. Janke & Kunkel / IKA) wird aus 9,38 g Isotridecyldecaethoxylat (Lutensol TO 109, Fa. BASF AG), 3,90 g Ricinusölethoxylat G 1300 (Fa. Atlas) und 4,55 g Wasser ein steifes Emulgatorgemisch hergestellt, zu dem 125,28 g eines frisch hergestellten homogenen Polymer/Silangemisches aus 124,63 g Polydimethylsiloxandiol mit einem Gehalt an terminalen OH-Gruppen von 765 Gew.-ppm und 0,86 g N-Morpholylmethyl-methyldiethoxysilan dosiert wird. Es wird dann mit insgesamt 106,65 g Wasser portionsweise verdünnt, worauf man eine stabile Emulsion mit einer durchschnittlichen Teilchengröße von 275 nm erhält. Der Silicongehalt der Emulsion beträgt 50 %.

Durch Eindampfen der Emulsion nach einer Standzeit von 24h/25°C und Reextraktion des Siloxanpolymers mit n-Heptan wird nach Verdunsten des Lösemittels ein hochviskoses Polysiloxan mit einer Viskosität von 3400 Pa.s (25°C) erhalten, das in Toluol löslich ist und damit unvernetzt ist. Die Dispersion, die dieses hochviskose Polysiloxan enthält, ist nicht erfindungsgemäß.

### Vergleichsversuch 5:

In 85 Gewichtsteile der Emulsion aus Beispiel 5, die noch keine Kieselsäuredispersion enthält, werden 15 Gewichtsteile einer pulverförmigen, pyrogen erzeugten hochdispersen hydrophilen Kieselsäure (BET-Oberfläche: 150 m²/g) eingemischt. Aus der zuvor pastenförmigen Emulsion entsteht ein krümeliges Pulver, aus dem nach einer Trockenzeit von 4 Stunden/25°C kein als Dichtmasse geeigneter zusammenhängender elastischer Film erzeugt werden kann.

## Patentansprüche

1. Verfahren zur Herstellung von wässrigen Dispersionen von Organopolysiloxanen, durch
(a) Umsetzung von kondensationsfähige Gruppen aufweisende Organopolysiloxane (1) der allgemeinen Formel
R¹O(R₂SiO)ₓR¹ (I)
wobei R einen einwertigen Kohlenwasserstoffrest mit 1 bis 18 Kohlenstoffatomen bedeutet,
R¹ ein Wasserstoffatom oder einen Alkylrest mit 1 bis 8 Kohlenstoffatomen bedeutet, vorzugsweise ein Wasserstoffatom ist,
x eine ganze Zahl von 10 - 1100, bevorzugt 20 - 700, besonders bevorzugt 30 - 500 ist,
mit Silanen (2) der allgemeinen Formel
(R³O)₃SiCR²₂-Y (II)
oder deren Hydrolysate,
wobei R² ein Wasserstoffatom oder einen einwertigen Alkylrest mit 1 bis 4 Kohlenstoffatomen, bevorzugt ein Wasserstoffatom bedeutet,
R³ einen Alkylrest mit 1 bis 8 Kohlenstoffatomen je Rest bedeutet,
Y einen Rest der Formel -NHR⁴, -NR⁴₂ oder -NR⁵ ist, wobei R⁴ einen einwertigen, gegebenenfalls N- und/oder O-Atome enthaltenden Kohlenwasserstoffrest mit 1 bis 18 Kohlenstoffatomen und
R⁵ einen zweiwertigen gegebenenfalls N- und/oder O-Atome enthaltenden Kohlenwasserstoffrest mit 3 bis 12 Kohlenstoffatomen bedeutet,
in Gegenwart von Wasser (3)
und Emulgator (4),
(b) Zugabe von wässrigen Kieselsäuredispersionen (5), gegebenenfalls im Gemisch mit Silanen (2) der Formel (II), entweder bei der Umsetzung (a) oder nach der Umsetzung (a), bevorzugt nach der Umsetzung (a),
(c) gegebenenfalls Zugabe von Haftvermittlern (6) entweder bei der Umsetzung (a) oder nach der Umsetzung (a), bevorzugt nach der Umsetzung (a),und
(d) gegebenenfalls Zugabe weiterer Stoffe (7), die an der Umsetzung (a) nicht teilnehmen, entweder bei der Umsetzung (a) oder nach der Umsetzung (a), bevorzugt nach der Umsetzung (a),
mit der Maßgabe, dass keine Metall-haltigen Katalysatoren mitverwendet werden und dass die Organopolysiloxane (1) und Silane (2) in solchen Mengen eingesetzt werden, dass die Organopolysiloxane nach dem Entfernen des Wassers (3) elastomere Filme bilden, die in Toluol unlöslich sind.

2. Verfahren nach Anspruch 1, **dadurch gekennzeichnet, dass** Silan (2) in solchen Mengen eingesetzt wird, dass 0,6 bis 2 Äquivalente -OR³ je Äquivalent -OR¹ in Organopolysiloxan (1) vorliegen, wobei R¹ vorzugsweise ein Wasserstoffatom ist.

3. Wässrige Dispersionen von Organopolysiloxanen, erhältlich durch
(a) Umsetzung von kondensationsfähige Gruppen aufweisende Organopolysiloxane (1) der allgemeinen Formel
R¹O(R₂SiO)ₓR¹ (I)
wobei R einen einwertigen Kohlenwasserstoffrest mit 1 bis 18 Kohlenstoffatomen bedeutet,
R¹ ein Wasserstoffatom oder einen Alkylrest mit 1 bis 8 Kohlenstoffatomen bedeutet, vorzugsweise ein Wasserstoffatom ist,
x eine ganze Zahl von 10 - 1100, bevorzugt 20 - 700, besonders bevorzugt 30 - 500 ist,
mit Silanen (2) der allgemeinen Formel
(R³O)₃Si-CR²₂-Y (II)
oder deren Hydrolysate,
wobei R² ein Wasserstoffatom oder einen einwertigen Alkylrest mit 1 bis 4 Kohlenstoffatomen, bevorzugt ein Wasserstoffatom bedeutet,
R³ einen Alkylrest mit 1 bis 8 Kohlenstoffatomen je Rest bedeutet,
Y einen Rest der Formel -NHR⁴, -NR⁴₂ oder -NR⁵ ist,
wobei R⁴ einen einwertigen, gegebenenfalls N- und/oder O-Atome enthaltenden Kohlenwasserstoffrest mit 1 bis 18 Kohlenstoffatomen und
R⁵ einen zweiwertigen gegebenenfalls N- und/oder O-Atome enthaltenden Kohlenwasserstoffrest mit 3 bis 12 Kohlenstoffatomen bedeutet,
in Gegenwart von Wasser (3)
und Emulgator (4),
(b) Zugabe von wässrigen Kieselsäuredispersionen (5), gegebenenfalls im Gemisch mit Silanen (2) der Formel (II), entweder bei der Umsetzung (a) oder nach der Umsetzung (a), bevorzugt nach der Umsetzung (a),
(c) gegebenenfalls Zugabe von Haftvermittlern (6) entweder bei der Umsetzung (a) oder nach der Umsetzung (a), bevorzugt nach der Umsetzung (a),und
(d) gegebenenfalls Zugabe weiterer Stoffe (7), die an der Umsetzung (a) nicht teilnehmen, entweder bei der Umsetzung (a) oder nach der Umsetzung (a), bevorzugt nach der Umsetzung (a),
mit der Maßgabe, dass keine Metall-haltigen Katalysatoren mitverwendet werden und dass die Organopolysiloxane (1) und Silane (2) in solchen Mengen eingesetzt werden, dass die Organopolysiloxane nach dem Entfernen des Wassers (3) elastomere Filme bilden, die in Toluol unlöslich sind.

4. Wässrige Dispersionen nach Anspruch 3, **dadurch gekennzeichnet, dass** Silan (2) in solchen Mengen eingesetzt wird, dass 0,6 bis 2 Äquivalente -OR³ je Äquivalent -OR¹ in Organopolysiloxan (1) vorliegen, wobei R¹ vorzugsweise ein Wasserstoffatom ist.

5. Verwendung der wässrigen Dispersionen nach Anspruch 3 oder 4 als Dichtungs- oder Beschichtungsmassen.

6. Formkörper hergestellt durch Entfernen des Wassers (3) aus den wässrigen Dispersionen gemäß Anspruch 3 oder 4 oder hergestellt nach Anspruch 1 oder 2.

7. Formkörper nach Anspruch 6, **dadurch gekennzeichnet, dass** die wässrigen Dispersionen bei einer Temperatur von 5 bis 150°C trocknen gelassen werden.

8. Formkörper nach Anspruch 6 oder 7, **dadurch gekennzeichnet, dass** es sich um elastomere Formkörper handelt.

9. Formkörper nach Anspruch 4, 5 und 6, **dadurch gekennzeichnet, dass** es sich um elastische Filme handelt, die transparent sind.

10. Formkörper nach einem der Ansprüche 6 bis 8, **dadurch gekennzeichnet, dass** es sich um Dichtungen handelt.

11. Verfahren zur Herstellung von elastischen Filmen, **dadurch gekennzeichnet, dass** die wässrige Dispersion gemäß Anspruch 3 oder 4 oder hergestellt gemäß Anspruch 1 oder 2, auf ein Substrat aufgetragen wird und das Wasser entfernt wird.
